# EUROPEAN PATENT APPLICATION

(11) **EP 3 537 423 A1**
(43) Date of publication of application: **11.09.2019**
(21) Application number: 17879448.3
(22) Date of filing: 25.04.2017
(51) Int. Cl.: G09G 3/36

(54) **MOBILE DEVICE, BACKLIGHT CONTROL METHOD THEREOF, AND FLASH CALIBRATION METHOD AND APPARATUS THEREOF**

(30) Priority: 09.12.2016 CN 201611129942
(71) Applicant: Huawei Technologies Co., Ltd., Longgang District Shenzhen, Guangdong 518129 (CN)
(72) Inventor: CHEN, Min, Shenzhen Guangdong 518129 (CN)
(74) Representative: Maiwald Patent- und Rechtsanwaltsgesellschaft mbH
(86) International application number: PCT/CN2017/081922
(87) International publication number: WO 2018/103253

(57) **Abstract**

A mobile device and a backlight control method thereof, and a flash calibration method and apparatus that relate to the field of backlights are provided, so as to reduce production costs and make full use of performance of a driver IC (1). The mobile device includes the driver IC (1) and a shunt module (2), where the driver IC (1) and the shunt module (2) are connected to a backlight module (3); the backlight module (3) includes at least one backlight string (31-1); a voltage output pin (11) of the driver IC (1) is connected to an anode of the backlight string (31-1), and a sink current pin (12-1) of the driver IC (1) is connected to a cathode of the backlight string (31-1); the shunt module (2) includes at least one shunt circuit (21-1), where an input end of the shunt circuit (21-1) is connected to the cathode of the backlight string (31-1), and an output end of the shunt circuit (21-1) is grounded; and the shunt circuit (21-1) is further connected to an application processor (4), and the application processor (4) is configured to control opening/closing of the shunt circuit (21-1), where when the shunt circuit (21-1) is open, the driver IC (1) drives the backlight string (31-1) in the backlight module (3) to emit light normally, and when the shunt circuit (21-1) is closed, the driver IC (1) drives the backlight string (31-1) in the backlight module (3) to flash.

## Description

This application claims priority to Chinese Patent Application No. 201611129942.5, filed with the Chinese Patent Office on December 9, 2016 and entitled "MOBILE DEVICE", which is incorporated herein by reference in its entirety.

### TECHNICAL FIELD

This application relates to the field of backlights, and in particular, to a mobile device and a backlight control method thereof, and a flash calibration method and apparatus.

### BACKGROUND

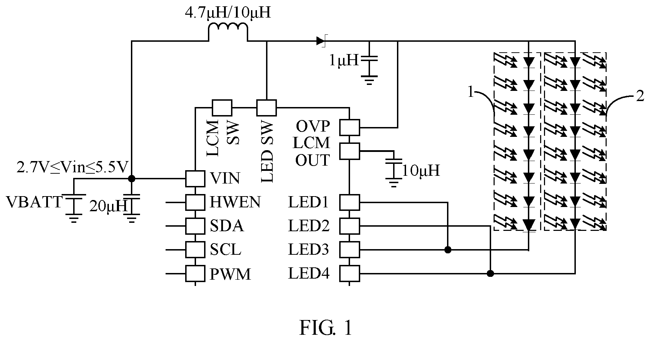

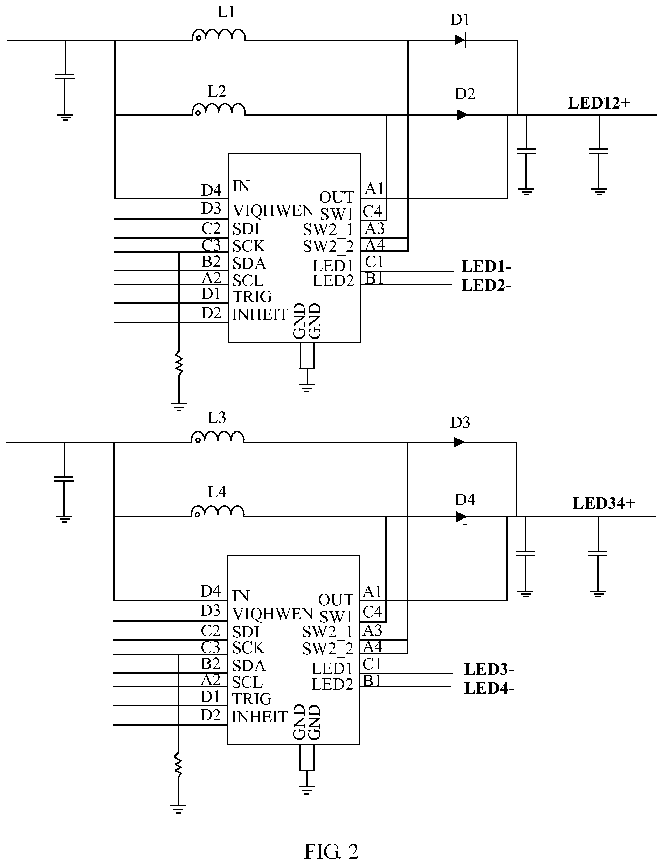

At present, a product that uses a screen as a front flash is already available on the market. Driver integrated circuits (integrated circuit, IC) of such products has a common point that a quantity of paths of the driver IC is twice or multiple times of a quantity of backlight light emitting diode (Light Emitting Diode, LED) strings, so as to support a large current during flashing. There are two specific design manners:
Manner 1: FIG. 1 includes an LED light string 1 and an LED light string 2. The LED light string 1 is connected to sink current (sink electric current) pins LED 1 and LED 3 of the driver IC. A current of the LED light string 1 flows to ground through the sink current pin LED 1 and the sink current pin LED 3, and a current of the LED light string 2 flows to the ground through a sink current pin LED 2 and a sink current pin LED 4. Therefore, the driver IC can control on/off statuses of current paths corresponding to the two sink current pins LED 1 and LED 3 to determine whether the LED light string 1 emits light normally or flashes, and control a current value of a current source correspondingly connected to the two sink current pins LED 1 and LED 3, to control a current value of the LED light string 1 to determine brightness of the LED light string 1 during normal light-emission or flashing. Similarly, the driver IC controls on/off statuses of current paths corresponding to the two sink current pins LED 2 and LED 4 to determine whether the LED light string 2 emits light normally or flashes, and controls a current value of a current source correspondingly connected to the two sink current pins LED 2 and LED 4, to determine brightness of the LED light string 2 during normal light-emission or flashing. In a normal display state, a drive current of each LED light string flows to the ground through a current path, in which any sink current pin corresponding to the LED light string is located, in the driver IC. A magnitude of the drive current can be configured based on user-specified brightness in a content adaptive backlight control (Content Adaptive Backlight Control, CABC) manner or the like. During flashing, the drive current of each LED light string flows to the ground through current paths, in which two sink current pins corresponding to the LED light string are located, in the driver IC. In a connection manner shown in FIG. 1, an LED light string is directly connected to two sink current pins, and the driver IC independently controls a switch that is used for turning on/off a current path in which each sink current pin is located. Because an application manager (Application Processor, AP) can configure a current value for and enable (Enable) a current source connected to the sink current pins corresponding to each LED light string, a current value of a current source connected to each sink current pin is increased through adjustment and current paths connected to four sink current pins are all turned on, so that brightness of the LED light string during flashing is two or three times of maximum screen brightness during normal light-emission. A disadvantage of a technology shown in FIG. 1 is that a large quantity of current paths are required. For a backlight driver IC with four current paths, if a backlight flash feature is supported, a maximum of two LED light strings can be used. In this case, for a screen with a fixed quantity of LED lights, a quantity of LED lights in each LED light string is increased, and therefore an output voltage of a backlight is increased. As a result, a high output voltage causes lower efficiency of the driver IC and a higher withstand voltage requirement of an external capacitor. During normal display, only half of the current paths are used, and therefore this solution appears redundant.
Manner 2: Referring to FIG. 2, two driver ICs are used. A value of a drive current that can be output by one driver IC is related to an applied inductance value. A larger inductance value indicates a larger drive current value of a current path in which the driver IC is located. During chip circuit design, two drive current paths with different current values are required. As shown in the two driver ICs in FIG. 2, inductance values of an inductor L1 and an inductor L3 are relatively large, and inductance values of an inductor L2 and an inductor L4 are relatively small. A current path in which the inductor L1 and a diode D1 are located and a current path in which the inductor L3 and a diode D3 are located are current paths with high drive current values. A current path in which the inductor L2, a diode D2, and the inductor L4 are located and a current path in which a diode D4 is located are current paths with low drive current values. In addition, four LED light strings can be connected in FIG. 2. Anodes of a first LED light string and a second LED light string are connected to an LED 12+ in FIG. 2, a cathode of the first LED light string is connected to an LED 1-, and a cathode of the second LED light string is connected to an LED 2-. Anodes of a third LED light string and a fourth LED light string are connected to an LED 34+ in FIG. 2, a cathode of the third LED light string is connected to an LED 3-, and a cathode of the fourth LED light string is connected to an LED 4-. During normal display, a current path with a low drive current is controlled to be used; when flashing is required, a current path with a high drive current is controlled to be used. Considering efficiency improvement and backlight drive performance, during normal display, the current path with a high drive current can also drive an LED light string to work. However, the current path with a high drive current has relatively low efficiency in this case, and the high drive current cannot be sufficiently utilized; therefore, in this case, the current path with a low drive current is used to drive the LED light string. During flashing, a large enough current is required to drive the LED light string to achieve a high-brightness effect, and therefore the current path with a high drive current is used to drive working. An advantage of this method lies in that extra pins do not need to be added during chip design. As shown in FIG. 2, a quantity of LED light strings may be equal to a quantity of current paths corresponding to sink current pins of the driver IC. If the quantity of LED light strings is greater than the quantity of current paths of the driver IC, a quantity of driver ICs is increased accordingly. However, a disadvantage of this technology lies in that: Due to addition of the driver IC, a power inductor, and a diode, design of a sink current of an LED needs to adapt to both a current required during normal display and a current required during flashing. Therefore, the design is not simple enough.

In conclusion, a prior-art disadvantage lies in that: A relatively large quantity of current paths of the driver IC are required, resulting in a large quantity of chip pins, a large package, and design redundancy. For an application with a large quantity of backlight LED light strings, at least two driver ICs are required to support a requirement of a sudden current increase, thereby increasing product costs.

### SUMMARY

This application provides a mobile device and a backlight control method thereof, and a flash calibration method and apparatus, so as to reduce production costs and make full use of performance of a driver IC.

To achieve the foregoing objective, the following technical solutions are used in embodiments of this application:
A first aspect provides a mobile device, including a driver IC, a backlight module, an application processor, and a shunt module, where the driver IC and the shunt module are connected to the backlight module, and the backlight module includes at least one backlight string; a voltage output pin of the driver IC is connected to an anode of the backlight string, and a sink current pin of the driver IC is connected to a cathode of the backlight string; and the shunt module includes at least one shunt circuit, where an input end of the shunt circuit is connected to the cathode of the backlight string, and an output end of the shunt circuit is grounded; and the shunt circuit is further connected to the application processor, and the application processor is configured to control opening/closing of the shunt circuit, where when the shunt circuit is open, the driver IC drives the backlight string in the backlight module to emit light normally, and when the shunt circuit is closed, the driver IC drives the backlight string in the backlight module to flash.

The mobile device provided in the foregoing solution includes the driver IC and the shunt module, where the driver IC and the shunt module are connected to the backlight module, and the backlight module includes the at least one backlight string; the shunt module is connected between the cathode of the backlight string and a ground end; the shunt module includes the at least one shunt circuit, and opening/closing of the shunt circuit is controlled by the application processor; when the shunt circuit is open, the driver IC drives the backlight string to emit light normally, and when the shunt circuit is closed, because the shunt module plays a shunting role, a current of the backlight string may be increased when a voltage supplied to the backlight string by the driver IC remains unchanged, so that light-emitting brightness of the backlight string increases and the backlight string enters a flashing state. In this solution, performance of the driver IC itself is fully utilized on a whole and redundant design is avoided. Therefore, according to the foregoing solution, the performance of the driver IC is fully utilized, a normal-light-emission state and a flashing state are implemented on a basis of a simplified structure of the mobile device, and production costs are reduced.

Specifically, in the foregoing solution, the shunt circuit includes a shunt component and a switch, a first end of the shunt component is connected to an input end of the shunt circuit, a second end of the shunt component is connected to a first end of the switch, a second end of the switch is connected to an output end of the shunt circuit, and a control end of the switch is connected to a general purpose input/output interface of the application processor, where the control end of the switch controls opening/closing of the switch based on a signal of the application processor. The shunt component is at least one of the following: a resistor, a fixed current source, or a field effect transistor.

In addition, in actual product design, the backlight string is a light string with a preset quantity of LED lights connected in series. A positive electrode of a first LED light in the preset quantity of LED lights is connected to the voltage output pin of the driver IC. A positive electrode of an nth LED light in the preset quantity of LED lights is connected to a negative electrode of an (n-1)th LED light in the preset quantity of LED lights. Each sink current pin of the driver IC is connected to a positive electrode of a last LED light in a preset quantity of LED lights of a corresponding LED light group and a first end of a corresponding shunt component, where n≥2, and n is a positive integer.

In actual product design, it needs to be considered that a current supplied to the backlight string by the driver IC is to be controlled. Therefore, in an example, the driver IC includes at least one current source. A positive electrode of the current source is connected to the sink current pin, and a negative electrode of the current source is grounded. When the shunt circuit is closed, a current generated by the current source and a current generated by the shunt circuit are used to drive the backlight string to flash. In this way, the current of the backlight string can be adjusted by controlling a magnitude of the current source, so as to adjust brightness of the backlight module.

According to a second aspect, a backlight control method for a mobile device is provided, including:
when a backlight string emits light normally, controlling, by an application processor, a shunt circuit in a shunt module to be open, where a voltage output pin of a driver IC outputs a drive current into an anode of a backlight string in a backlight module, to drive the backlight string to emit light normally, and the drive current flows to a sink current pin of the driver IC through the backlight string; and
when the backlight string emits light normally and flashes, controlling, by the application processor, the shunt circuit in the shunt module to be closed, where the voltage output pin of the driver IC outputs a drive current into the anode of the backlight string, to drive the backlight module to flash; and the drive current is divided into two branches after passing through the backlight string, one branch enters the sink current pin of the driver IC, and the other branch flows to a ground end through the shunt module.

According to the backlight control method for the mobile device provided in the foregoing solution, the application processor controls an open/closed status of the shunt circuit in the shunt module, to control whether the backlight module emits light normally or flashes. When the shunt circuit is open, the shunt module does not function, and the driver IC drives the backlight string in the backlight module to emit light normally. When the shunt circuit is closed, because the shunt circuit plays a shunting role, a current of the backlight string in the backlight module may be increased when a voltage supplied to the backlight module by the driver IC remains unchanged, so that light-emitting brightness of the backlight module increases and the backlight module enters a flashing state. Compared with the prior art, non-redundant design is used in the solution provided in this embodiment of this application, the driver IC does not need to provide more paths and a quantity of driver ICs does not need to be increased, and normal light-emission and flashing of the backlight module can be implemented by merely adding a low-cost shunt circuit to the driver IC and controlling the shunt circuit. Therefore, according to the solution provided in this embodiment of this application, performance of the driver IC is fully utilized, a normal-light-emission state and a flashing state are implemented on a basis of a simplified structure of the mobile device, and production costs are reduced.

In actual application, a user may have different requirements for the light-emitting brightness of the backlight module in different cases. To resolve this problem, for example, the backlight control method further includes: when the backlight string emits light normally, a current value of the drive current in this case is equal to a current value of a current source, and therefore the driver IC controls the current value of the current source based on a preset brightness value, to make a light-emitting brightness value of the backlight string in the backlight module equal to the preset brightness value; and when the backlight string flashes, the current value of the drive current in this case is a sum of the current value of the current source and a current value of the shunt circuit, and the driver IC sets the current value of the current source in the driver IC based on a preset flash current value, so that the backlight string flashes. The preset brightness value and the preset flash current value are set by the user by using the application processor or are factory settings.

During flash control of the backlight module, in an ideal state, a resistance value of the shunt circuit is calculated based on an end voltage of the shunt circuit and a maximum current value of the current source. However, after the resistance value of the shunt circuit is initially determined, during subsequent flash control, because voltage-current characteristics of all backlight strings in the backlight module are different and also change with temperature and time, the preset flash current value in the foregoing solution also needs to be calibrated, so as to be subsequently used as a standard for adjusting the current value of the current source by the driver IC during flashing.

Therefore, a third aspect further provides a flash calibration method for a mobile device, where the method includes: when a shunt circuit is closed, obtaining a current value of a drive current flowing through a backlight string; when the current value of the drive current is less than a rated flash current value, controlling a current value of a current source to increase until the current value of the drive current falls within a preset range around the rated flash current value; when the current value of the drive current is greater than the rated flash current value, controlling the current value of the current source to decrease until the current value of the drive current falls within the preset range around the rated flash current value; and when the current value of the drive current is equal to the rated flash current value, controlling the current value of the current source to remain unchanged.

Specifically, the obtaining a current value of a backlight string includes:
obtaining a voltage of a sink current pin of a driver IC; controlling the current value of the current source to be a predetermined test value; and calculating a current value of the shunt circuit based on the voltage of the sink current pin of the driver IC and a resistance value of the shunt circuit in a shunt module, and adding the current value of the shunt circuit and the predetermined test value to obtain the current value of the drive current. During selection of a switch of the shunt circuit, resistance of the switch is generally less than one hundredth of resistance of a shunt component. Therefore, to facilitate actual calculation, the resistance of the shunt component is used as the resistance of the shunt circuit for calculation.

In addition, during actual calibration of the current value of the current source, a current change of the current source also causes a change in a voltage of a corresponding sink current pin, a current of a corresponding shunt component also changes, and a current of a corresponding backlight string also changes accordingly. Therefore, the current of the current source is impossibly increased or decreased to an appropriate value by one step. In this case, the controlling a current value of a current source to increase until the current value of the backlight string falls within a preset range of the rated flash current value includes: controlling the current value of the current source to increase by a predetermined step value; re-obtaining a current value of the drive current; and when the current value of the drive current falls out of the preset range around the rated flash current value, controlling the current value of the current source to increase by the predetermined step value.

The controlling the current value of the current source to decrease until the current value of the drive current falls within the preset range of the rated flash current value includes: controlling the current value of the current source to decrease by the predetermined step value; re-obtaining a current value of the drive current; and when the current value of the drive current falls out of the preset range around the rated flash current value, controlling the current value of the current source to decrease by the predetermined step value.

Specifically, a current value, obtained after calibration and meeting a requirement, of the current source is used as the preset flash current value for use in a subsequent backlight control process of the mobile device.

In addition, a current calibration process of the current source in the foregoing solution may be directly completed by the driver IC, or may be controlled by an application in a mobile phone.

A fourth aspect provides a flash calibration apparatus of a mobile device, including an obtaining unit and a control unit, where
the obtaining unit is configured to: when a shunt circuit is closed, obtain a current value of a drive current flowing through a backlight string; when the current value, obtained by the obtaining unit, of the drive current is less than a rated flash current value, the control unit controls a current value of the current source to increase until the current value of the drive current falls within a preset range around the rated flash current value; when the current value, obtained by the obtaining unit, of the drive current is greater than the rated flash current value, the control unit controls the current value of the current source to decrease until the current value of the drive current falls within the preset range around the rated flash current value; and when the current value, obtained by the obtaining unit, of the drive current is equal to the rated flash current value, the control unit controls the current value of the current source to remain unchanged.

According to the flash calibration apparatus of the mobile device provided in the fourth aspect, when the shunt circuit is closed, the obtaining unit first obtains the current value of the drive current flowing through the backlight string; when the current value, obtained by the obtaining unit, of the drive current is not equal to the rated flash current value, the control unit controls the current value of the current source to increase or decrease until the current value of the drive current falls within the preset range around the rated flash current value; and when the current value, obtained by the obtaining unit, of the drive current is equal to the rated flash current value, the control unit controls the current value of the current source to remain unchanged. Therefore, according to the flash calibration apparatus of the mobile device provided in this embodiment of the present invention, the drive current value of the backlight string is compared with the rated flash current value, then the current value of the current source is changed until the drive current value of the backlight string falls within a range close to the rated flash current value, and a last-changed-to current value of the current source can be used as a current standard of the current source when the mobile device needs to flash during subsequent work, so as to avoid an error of the drive current when the mobile device flashes.

Based on a same inventive concept, for a problem resolving principle and beneficial effects of the flash calibration apparatus of the mobile device, refer to the foregoing third aspect and possible method implementations of the third aspect, and beneficial effects brought by the foregoing third aspect and the possible method implementations of the third aspect. Therefore, for specific implementation of the apparatus and division of functional units, refer to the foregoing third aspect and the possible method implementations of the third aspect, and repeated content is not described herein again.

A fifth aspect provides a flash calibration apparatus of a mobile device, including a processor, a memory, a bus, and a communications interface. The memory is configured to store a computer execution instruction, the processor is connected to the memory by using the bus, and when the flash calibration apparatus of the mobile device runs, the processor executes the computer execution instruction stored in the memory, so that the flash calibration apparatus of the mobile device performs the method provided in the second aspect or the third aspect. Based on a same inventive concept, for a problem resolving principle and beneficial effects of the apparatus, refer to the foregoing third aspect and possible method implementations of the third aspect, and beneficial effects brought by the foregoing third aspect and the possible method implementations of the third aspect. Therefore, for implementation of the apparatus, refer to the foregoing third aspect and the possible method implementations of the third aspect, and repeated content is not described herein again.

A sixth aspect provides a computer storage medium, including an instruction. When the instruction is executed on a computer, the computer performs the method provided in the second aspect or the third aspect.

A seventh aspect provides a computer program product including an instruction. When the computer program product runs on a computer, the computer performs the method provided in the second aspect or the third aspect.

### BRIEF DESCRIPTION OF DRAWINGS

To describe the technical solutions in the embodiments of this application or in the prior art more clearly, the following briefly describes the accompanying drawings required for describing the embodiments or the prior art.
FIG. 1 is a schematic structural diagram of a mobile device provided in the prior art;
FIG. 2 is a schematic structural diagram of another mobile device provided in the prior art;
FIG. 3 is a schematic structural diagram of a mobile device according to an embodiment of this application;
FIG. 4 is a schematic structural diagram of a mobile device according to an embodiment of this application;
FIG. 5 is a schematic structural diagram of a specific instance of a mobile device according to an embodiment of this application;
FIG. 6 is a schematic flowchart of a backlight control method for a mobile device according to an embodiment of this application;
FIG. 7 is a schematic flowchart of a flash calibration method for a mobile device according to an embodiment of this application;
FIG. 8 is a schematic structural diagram of a flash calibration apparatus of a mobile device according to an embodiment of this application;
FIG. 9 is a schematic structural diagram of another flash calibration apparatus of a mobile device according to an embodiment of this application; and
FIG. 10 is a schematic structural diagram of still another flash calibration apparatus of a mobile device according to an embodiment of this application.

### DESCRIPTION OF EMBODIMENTS

The following describes the embodiments of this application with reference to accompanying drawings.

For clear description of the technical solutions of the embodiments of this application, in the embodiments of the present invention, the terms "first", "second", and the like are used to distinguish same or similar items whose functions or roles are substantially the same. A person skilled in the art can understand that the terms "first", "second", and the like do not limit a quantity and an execution order.

It should be noted that, in the embodiments of this application, the words "exemplary", "for example", or the like are used to represent an example, an illustration, or a description. Any embodiment or design solution described as "exemplary" or "for example" in the embodiments of this application should not be construed as preferred or advantageous over other embodiments or design solutions. Exactly, use of the word "exemplary" or "example" or the like is intended to present a related concept in a specific manner. In the embodiments of this application, "of (English: of)", "corresponding (English: corresponding, relevant)", and "corresponding (English: corresponding)" may sometimes be mixed. It should be noted that meanings of the foregoing words are the same when a difference is not emphasized.

Referring to FIG. 1 and FIG. 2, a mobile device in the prior art has design redundancy, and does not fully utilize performance of a driver IC. Because the performance of the driver IC is not fully utilized in a structure, a finished product also has relatively high costs.

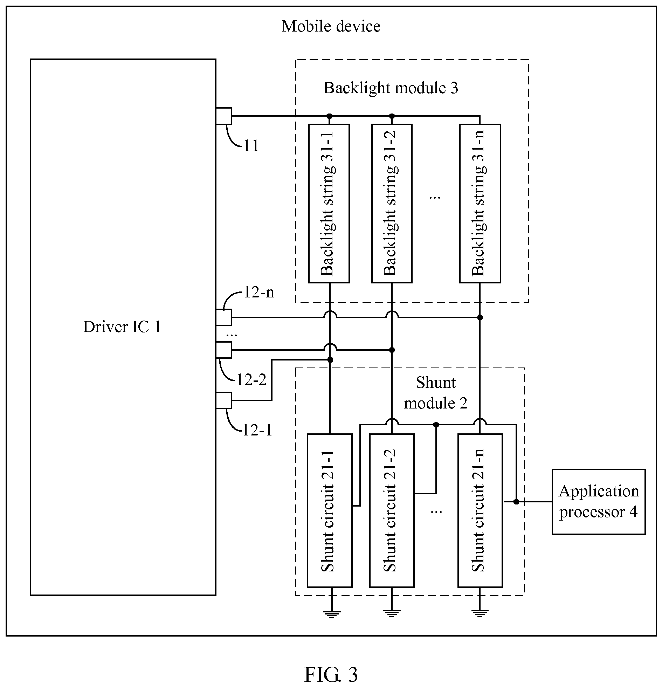

To resolve the foregoing problem, referring to FIG. 3, an embodiment of this application provides a mobile device, including:
a driver IC 1, a backlight module 3, an application processor 4, and a shunt module 2. The driver IC 1 and the shunt module 2 are separately connected to the backlight module 3, and the backlight module 3 includes at least one backlight string 31-n. A voltage output pin 11 of the driver IC 1 is connected to an anode of the backlight string 31-n, and a sink current pin 12-n of the driver IC 1 is connected to a cathode of the backlight string. The shunt module 2 includes at least one shunt circuit 21-n, where an input end of the shunt circuit 21-n is connected to the cathode of the backlight string 31-n, and an output end of the shunt circuit 21-n is grounded; and the shunt circuit 21-n is further connected to the application processor 4. The application processor 4 is configured to control opening/closing of the shunt circuit 21-n. When the shunt circuit 21-n is open, the driver IC 1 drives the backlight string 31-n in the backlight module 3 to emit light normally, and when the shunt circuit 21-n is closed, the driver IC 1 drives the backlight string 31-n in the backlight module 3 to flash.

n is not less than 1 and is a positive integer.

According to the mobile device provided in this embodiment of this application, the driver IC and the shunt module are separately connected to the backlight module, and the backlight module includes the at least one backlight string. The shunt module is connected between the cathode of the backlight string and a ground end. The shunt module includes the at least one shunt circuit, and opening/closing of the shunt circuit is controlled by the application processor. When the shunt circuit is open, the driver IC drives the backlight string to emit light normally, and when the shunt circuit is closed, because the shunt module plays a shunting role, a current of the backlight string may be increased when a voltage supplied to the backlight string by the driver IC remains unchanged, so that light-emitting brightness of the backlight string increases and the backlight string enters a flashing state. In this solution, performance of the driver IC itself is fully utilized on a whole and redundant design is avoided. Therefore, according to the foregoing solution, the performance of the driver IC is fully utilized, a normal-light-emission state and a flashing state are implemented on a basis of a simplified structure of the mobile device, and production costs are reduced.

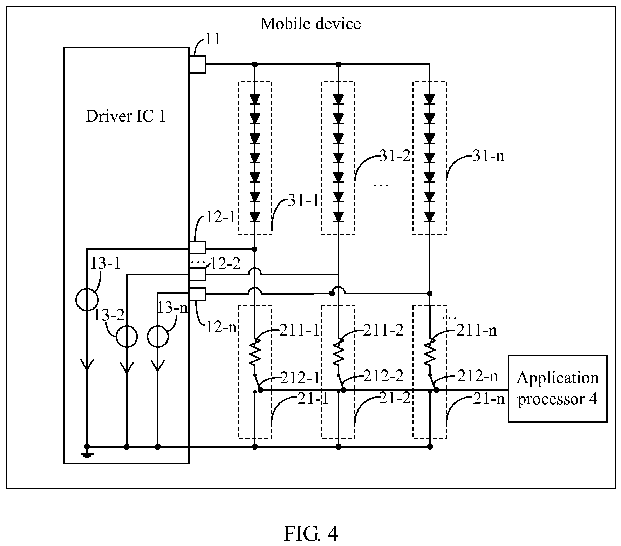

For example, referring to FIG. 4, the shunt circuit 21-n of the shunt module 2 in the mobile device provided in this embodiment of this application includes a shunt component 211-n and a switch 212-n. A first end of the shunt component 211-n is connected to an input end of the shunt circuit 21-n, a second end of the shunt component 211-n is connected to a first end of the switch 212-n, a second end of the switch 212-n is connected to an output end of the shunt circuit 21-n, and a control end of the switch 212-n is connected to a general purpose input/output interface (General Purpose Input Output, GPIO) of the application processor 4. The control end of the switch 212-n controls on/off of the switch 212-n based on a signal of the application processor 4. The shunt component 211-n is at least one of the following: a resistor, a fixed current source, or a field effect transistor. To ensure current accuracy, when a resistor is used as the shunt component 211-n, the resistor is a resistor with an accuracy of not more than 1%, and the switch may be an NMOS (N-Metal-Oxide-Semiconductor, N-Metal-Oxide-Semiconductor) switch, where an on resistance of the NMOS switch should be less than 1% of a resistance value of the shunt component.

In addition, as shown in FIG. 4, in actual product design, the backlight string 31-n is an LED light string. Each LED light string is a light string with a preset quantity of LED lights connected in series. A positive electrode of a first LED light in the preset quantity of LED lights is connected to the voltage output pin of the driver IC. A positive electrode of an mth LED light in the preset quantity of LED lights is connected to a negative electrode of an (m-1)th LED light in the preset quantity of LED lights. Each sink current pin of the driver IC is connected to a positive electrode of a last LED light in a preset quantity of LED lights of a corresponding LED light group and a first end of a corresponding shunt component, where m≥2, and m is a positive integer.

In actual product design, it needs to be considered that a current supplied to the backlight string by the driver IC is to be controlled. Therefore, in an example, as shown in FIG. 4, the driver IC 1 includes at least one current source 13-n. A positive electrode of the current source 13-n is connected to the sink current pin 12-n, and a negative electrode of the current source 13-n is grounded. When the shunt circuit 21-n is open, a current generated by the current source 13-n is used to drive the backlight string 31-n to emit light normally. When the shunt circuit 21-n is closed, the current generated by the current source 13-n and a current generated by the shunt circuit 21-n are used to drive the backlight string 31-n to flash. In this way, the current of the backlight string 31-n can be adjusted by controlling a magnitude of the current source 13-n, so as to adjust brightness of the backlight module 3.

It should be noted that, in the foregoing solution, there is at least one sink current pin, one sink current pin is corresponding to one current source, and one current source is corresponding to one backlight string and one shunt circuit.

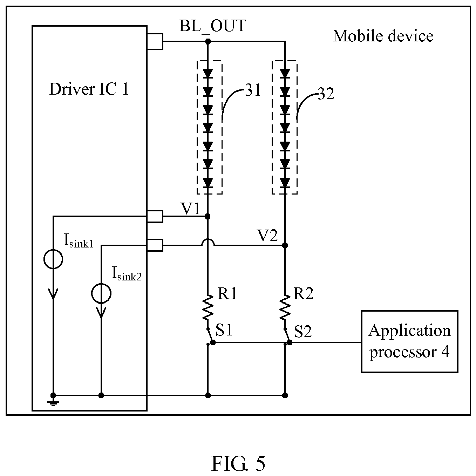

Referring to FIG. 5, two backlight strings and two shunt circuits are used as an example to describe a mobile device provided in an embodiment of this application. The backlight string is formed by connecting a specific quantity of LED lights in series.

BL_OUT is an anode output of the backlight string in a driver IC 1, and includes a voltage of dozens of V. Isink1 and Isink2 are high-precision current sources that are provided in chips and whose currents can be adjusted from 0 to dozens of mA. R1 and R2 are added resistors of the two shunt circuits in this solution. S1 and S2 are used as switches for opening/closing the shunt circuits during flashing. During normal working, S1 and S2 are turned off, and drive currents of backlight strings 31 and 32 are provided by Isink1 and Isink2. When flashing is required, on/off of S1 and S2 is controlled by an application manager 4 through a general purpose input/output interface. Currents of the two shunt circuits from V1 and V2 to ground is determined based on V1/(R1+RS1) and V2/(R2+RS2).

An embodiment of this application further provides a backlight control method for a mobile device, which includes a normal-light-emission phase of a backlight string and a flashing phase of the backlight string.

When the backlight string emits light normally, an application processor controls a shunt circuit in a shunt module to be open, a voltage output pin of a driver IC outputs a drive current into an anode of the backlight string, to drive the backlight string to emit light normally, and the drive current flows to a sink current pin of the driver IC through the backlight string.

When the backlight string flashes, the application processor controls the shunt circuit in the shunt module to be closed, the voltage output pin of the driver IC outputs a drive current into the anode of the backlight string, to drive the backlight string to flash; and the drive current is divided into two branches after passing through the backlight string, one branch enters the sink current pin of the driver IC, and the other branch flows to a ground end through the shunt module.

According to the backlight control method for the mobile device provided in the foregoing solution, the application processor controls an open/closed status of the shunt circuit in the shunt module, to control whether the backlight module emits light normally or flashes. When the shunt circuit is open, the shunt module does not function, and the driver IC drives the backlight string in the backlight module to emit light normally. When the shunt circuit is closed, because the shunt circuit plays a shunting role, a current of the backlight string in the backlight module may be increased when a voltage supplied to the backlight module by the driver IC remains unchanged, so that light-emitting brightness of the backlight string increases and the backlight string enters a flashing state. Compared with the prior art, non-redundant design is used in the solution provided in this embodiment of this application, the driver IC does not need to provide more paths and a quantity of driver ICs does not need to be increased, and normal light-emission and flashing of the backlight module can be implemented by merely adding a low-cost shunt circuit to the driver IC and controlling the shunt circuit. Therefore, according to the solution provided in this embodiment of this application, performance of the driver IC is fully utilized, a normal-light-emission state and a flashing state are implemented on a basis of a simplified structure of the mobile device, and production costs are reduced.

In addition, because a user may need to control brightness when the backlight module emits light normally or flashes. Therefore, in an example, the solution provided in this embodiment of this application further includes:
When the backlight string emits light normally, a current value of the drive current in this case is equal to a current value of a current source, and therefore the driver IC controls the current value of the current source based on a preset brightness value, to make a light-emitting brightness value of the backlight string in the backlight module equal to the preset brightness value. During flashing, the current value of the drive current is a sum of the current value of the current source and a current value of the shunt circuit, and the driver IC sets the current value of the current source in the driver IC based on a preset flash current value. The preset brightness value and the preset flash current value are set by the user by using the application processor or are factory settings.

Specifically, when the backlight string emits light normally, the shunt module is disconnected, and a current value of the current source is equal to a current value of the backlight string, that is, a current value of the drive current; therefore a change in the current value of the current source directly changes the current value of the backlight string, thereby meeting a brightness adjustment requirement.

When the backlight string is in a flashing state, the current value of the backlight string, that is, the current value of the drive current, is jointly determined by the current of the shunt circuit in the shunt module and a current of the current source in the driver IC. However, because the shunt circuit has a constant resistance value, and a voltage supplied to the backlight string by the driver IC is also constant, the brightness of the backlight string can be controlled by only changing the current of the current source.

The backlight control method in the foregoing solution is described with reference to the mobile device, including two backlight strings and two shunt circuits, shown in FIG. 5.

When a liquid crystal display of the mobile device is required to perform display normally, S1 and S2 are turned off, and only the current sources Isink1 and Isink2 work. Drive currents of the two backlight strings separately flow to the ground after flowing through the current source Isink1 and the current source Isink2, respectively. When an instruction that the user needs to perform brightness adjustment is received, screen brightness adjustment is implemented by adjusting currents of the current source Isink1 and the current source Isink2 through PWM (Pulse Width Modulation, Pulse Width Modulation) or by using an I2C (Inter-Integrated Circuit, Inter-Integrated Circuit).

When flashing is required, the switches S1 and S2 are turned on, and the drive current of the backlight string flows to both a current source path and a shunt circuit path. Herein, appropriate values may be selected for the shunt component R1 and the shunt component R2 to make the backlight string meet a brightness requirement during flashing. For example, it is assumed that a maximum current of the current source Isink1 and the current source Isink2 that can be reached is XmA, and the drive current of the backlight string is desired to reach 2XmA during flashing, values of V1 and V2 used when the currents of the current source Isink1 and the current source Isink2 reach X are referenced for selection of the shunt component R1 and the shunt component R2, where R1 = V1/X. A resistance value of the switch is less than one hundredth of a resistance value of the shunt component. Therefore, resistance of the switch can be ignored during calculation of total resistance of the shunt circuit. In addition, if flashing brightness during flashing needs to be reduced, the current value of the current source can be adjusted to reduce the current value of the drive current of the backlight string, so as to reduce the brightness of the backlight string.

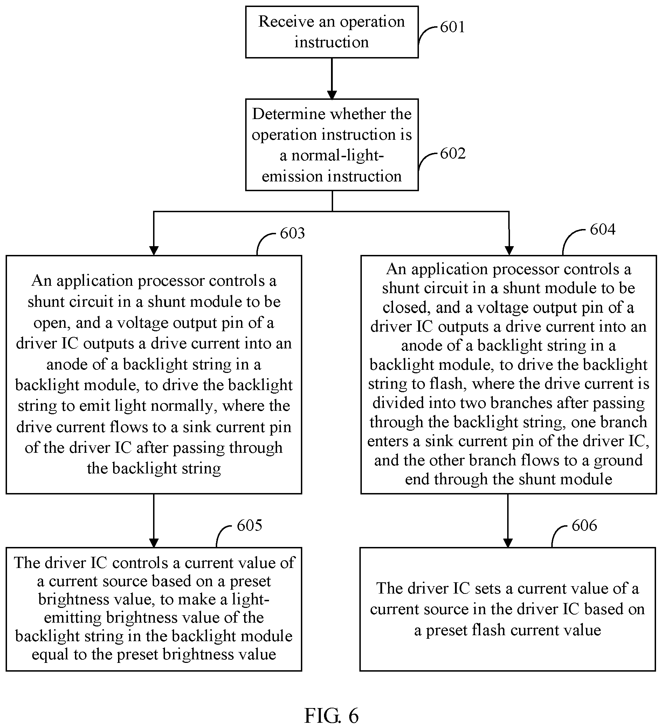

During actual product implementation in which the solution of the backlight control method for the mobile device provided in this embodiment of this application is used, after receiving an operation instruction, the application manager needs to determine the open/closed status of the shunt circuit and send an instruction to the driver IC, so that the driver IC controls the current source. An overall procedure of the backlight control method for the mobile device is shown in FIG. 6 and includes the following steps.

601: The mobile device receives an operation instruction.

Specifically, the operation instruction includes a normal-light-emission instruction and a flashing instruction. The operation instruction may be generated by the mobile device in response to a flashing requirement based on a user operation when a user operates an application on the mobile device (for example, clicking a camera button on a camera interface).

602: The mobile device determines whether the operation instruction is a normal-light-emission instruction.

If the operation instruction is a normal-light-emission instruction, the mobile device performs 603, and if the operation command is a flashing instruction, the mobile device performs 604.

603: The application processor of the mobile device controls the shunt circuit in the shunt module to be open, and a voltage output pin of the driver IC of the mobile device outputs a drive current into an anode of the backlight string in the backlight module, to drive the backlight string to emit light normally, where the drive current flows to a sink current pin of the driver IC after passing through the backlight string.

604: The application processor of the mobile device controls the shunt circuit in the shunt module to be closed; and the voltage output pin of the driver IC of the mobile device outputs the drive current into the anode of the backlight string in the backlight module, to drive the backlight string to flash, where the drive current is divided into two branches after passing through the backlight string, one branch enters the sink current pin of the driver IC, and the other branch flows to a ground end through the shunt module.

605: The driver IC of the mobile device controls a current value of the current source based on a preset brightness value, to make a light-emitting brightness value of the backlight string in the backlight module equal to the preset brightness value.

It should be noted that a current value of the backlight string, that is, a current value of the drive current, is the current value of the current source.

Specifically, when the current value of the current source in the driver IC is greater than a current value, corresponding to the preset brightness value, of the backlight string, the driver IC controls the current value of the current source to decrease until the current value of the current source is equal to the current value, corresponding to the preset brightness value, of the backlight string. When the current value of the current source in the driver IC is less than the current value corresponding to the preset brightness value, the current value of the current source in the driver IC is increased until the current value of the current source is equal to the current value, corresponding to the preset brightness value, of the backlight string. When the current value of the current source in the driver IC is equal to the current value, corresponding to the preset brightness value, of the backlight string, the current value of the current source in the driver IC remains unchanged.

606: The driver IC of the mobile device sets a current value of the current source in the driver IC based on a preset flash current value.

It should be noted that, in this case, the current value of the backlight string, that is, the current value of the drive current is a sum of the current value of the current source and a current value of the shunt circuit.

Specifically, when the current value of the current source is less than the preset flash current value, the driver IC controls the current value of the current source to increase until the current value of the current source is equal to the preset flash current value. When the current value of the current source is greater than the preset flash current value, the driver IC controls the current value of the current source to decrease until the current value of the current source is equal to the preset flash current value. When the current value of the current source is equal to the preset flash current value, the driver IC controls the current value of the current source to remain unchanged.

The preset brightness value and the preset flash current value described in step 605 and step 606 are set by the user by using the application processor or are factory settings. For example, if the backlight module of the mobile device is in a normal-light-emission state, and the user wants to adjust the brightness value preset by a current status system, the user may increase the brightness value by adjustment through touch or in another manner. After receiving a user request, the application processor of the mobile device sends an instruction to the driver IC, and the driver IC adjusts the current value of the current source according to the instruction, to implement brightness adjustment. The same is true in a flashing state.

During flash control of the backlight module, in an ideal state, a resistance value of the shunt circuit is calculated based on an end voltage of the shunt circuit and a maximum current value of the current source. However, after the resistance value of the shunt component is initially determined, the following problems occur.

A voltage-current curve of LED lights in the backlight string is different for different manufacturers, and varies with temperature. The LED lights have relatively poor consistency, and the voltage-current curve is different for different manufacturers, different batches, and different usage time, and even between different paths of a same mobile phone, there is also a difference; a change in a current of the LED lights causes a change in a voltage of the shunt circuit, and a current of the shunt circuit also changes, and a current of the backlight string formed by the LED lights also changes accordingly. These problems affect determining of the preset flash current value that is used as a standard when the current source is adjusted.

Therefore, the preset flash current value in the foregoing solution also needs to be calibrated, so as to be subsequently used as a standard for adjusting the current value of the current source by the driver IC during flashing.

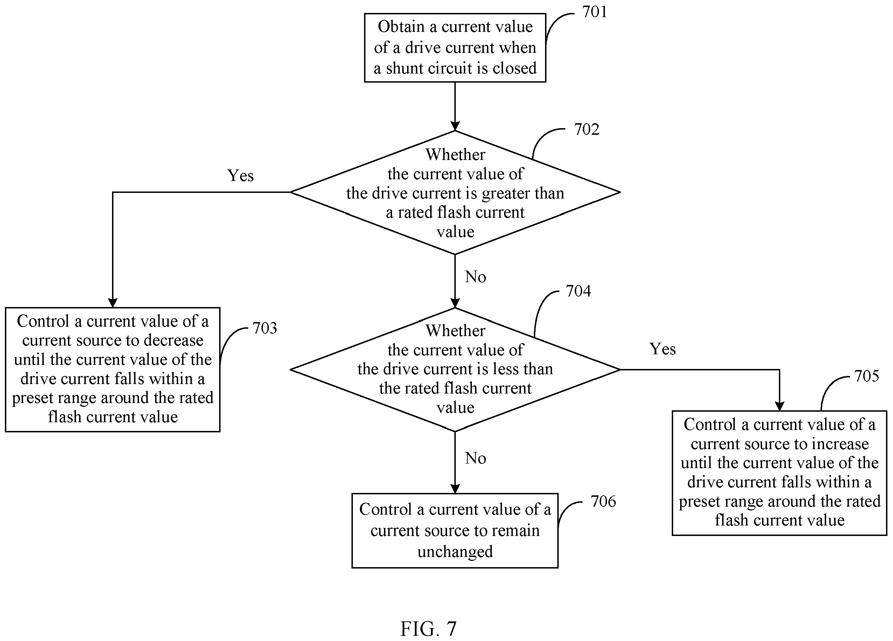

Therefore, as shown in FIG. 7, an embodiment of this application further provides a flash calibration method for a mobile device, including the following steps.

701: A flash calibration apparatus of the mobile device obtains a current value of a drive current when a shunt circuit is closed.

Specifically, the following is included: The flash calibration apparatus obtains a voltage of a sink current pin of a driver IC; the flash calibration apparatus controls a current value of a current source to be a predetermined test value; the flash calibration apparatus calculates a current value of the shunt circuit based on the voltage of the sink current pin of the driver IC and a resistance value of the shunt circuit in a shunt module; and the flash calibration apparatus adds the current value of the shunt circuit and the predetermined test value to obtain the current value of the drive current.

It should be noted that during actual calculation, a resistance value of a switch in the shunt circuit is less than one hundredth of a resistance value of a shunt component. Therefore, the resistance value of the shunt component is usually used as the resistance value of the shunt circuit.

The predetermined test value is obtained by subtracting a preset value from a maximum value of the current source.

702: The flash calibration apparatus determines whether the current value of the drive current is greater than a rated flash current value.

The rated flash current value is a preset current value of a backlight string during flashing.

If the current value of the drive current is greater than the rated flash current value, the flash calibration apparatus performs 703; if the current value of the drive current is not greater than the rated flash current value, the flash calibration apparatus performs 704.

703: The flash calibration apparatus controls a current value of a current source to decrease until the current value of the drive current falls within a preset range around the rated flash current value.

Specifically, because changing the current source during calibration affects a current of the shunt circuit, the current value of the current source cannot be changed to an appropriate value by one step, and step 703 specifically includes: The flash calibration apparatus controls the current value of the current source to decrease by a predetermined step value; the flash calibration apparatus re-obtains a current value of the drive current; and when the current value of the drive current falls out of the preset range around the rated flash current value, the flash calibration apparatus controls the current value of the current source to decrease by the predetermined step value. This process is repeated until the current value of the drive current falls within the preset range around the rated flash current value.

704: The flash calibration apparatus determines whether the current value of the drive current is less than the rated flash current value.

If the current value of the drive current is less than the rated flash current value, the flash calibration apparatus performs 705; if the current value of the drive current is not less than the rated flash current value, the flash calibration apparatus performs 706.

705: The flash calibration apparatus controls a current value of a current source to increase until the current value of the drive current falls within a preset range of the rated flash current value.

Specifically, because changing the current source during calibration affects the current of the shunt circuit, the current value of the current source cannot be changed to an appropriate value by one step, and step 703 specifically includes: The flash calibration apparatus controls the current value of the current source to increase by the predetermined step value; the flash calibration apparatus re-obtains a current value of the drive current; when the current value of the drive current falls out of the preset range around the rated flash current value, the flash calibration apparatus controls the current value of the current source to increase by the predetermined step value. This process is repeated until the current value of the drive current falls within the preset range around the rated flash current value

706: The flash calibration apparatus controls a current value of a current source to remain unchanged.

For example, the foregoing calibration process may be automatically performed within the driver IC; or a user operates an application of a mobile phone to trigger the driver IC to perform calibration.

It should be noted that the flash calibration apparatus may be a driver IC, or the flash calibration apparatus may be a module or a component in the driver IC.

For example, FIG. 5 is used as an example to describe the foregoing flash calibration method.
1. It is assumed that a maximum current of the two current sources Isink1 and Isink2 that can be reached is XmA, and the drive current of the backlight string formed by the LED lights is desired to reach 2XmA during flashing. Then, currents of the two current sources Isink1 and Isink2 are both set to be a predetermined test value (X-b)mA.
2. During calibration, the current of the current source Isink1 is increased to a maximum value (X-b)mA. At the same time, V1 is measured, and a current value IR1 of the shunt circuit at which the shunt component R1 is located is obtained based on a resistance value of the shunt component R1 selected in advance (a resistance value of the switch is very small during design, and therefore is ignored). Generally, it is considered that the current of the current source Isink1 is the predetermined test value (X-b)mA that is set, and a drive current of a backlight string 1 is I1=IR1+Isink1. A current calculation method for another backlight string is similar.
3. Assuming that the drive current I1 of the backlight string 31 is less than an ideal value ΔI1, the current of the current source Isink1 is increased by a specific predetermined step value, and V1 is measured again after the increase, to obtain a new current value IR1' of the shunt circuit. A new drive current of the backlight string 31 is I1' = Isink1' + IR1', and successive iteration is performed until I1 falls within a range being C% of the ideal value 2X of the drive current, and in this case, it is considered that the calibration is completed. A flash current calibration method for a current path in which another backlight string is located is similar. Last current configuration values of the current source Isink1 and the current source Isink2 are recorded as preset flash current values after product delivery from a factory.
4. If the drive current I1 of the backlight string 31 is greater than the ideal value ΔI1, the current of the current source Isink1 is decreased by a specific predetermined step value, and V1 is measured again after the decrease, to obtain a new current value IR1' of the shunt circuit. A new drive current of the backlight string 31 is I1' = Isink1' + IR1', and successive iteration is performed until I1 falls within a range being C% of the ideal value 2X of the drive current, and in this case, it is considered that the calibration is completed. The flash current calibration method for the current path in which the another backlight string is located is similar. The last current configuration values of the current source Isink1 and the current source Isink2 are recorded as the preset flash current values after product delivery from a factory.
   It should be noted that if a value deviation of the shunt components R1 and R2 and a deviation of an estimated V1 value and V2 value cause Isink1 and Isink2 to keep increasing/decreasing to a maximum reachable driving capability XmA of the current source in the driver IC, the drive current of the backlight string still does not reach the range being C% of the desired value, it is also considered that the calibration is completed and the last current configuration value of the current source is recorded. Herein, the current configuration value of the current source is the preset flash current value mentioned in the foregoing solution, and the ideal value of the drive current is the rated flash current value in the foregoing solution.
5. The calibration process needs to be performed on paths one by one. The path described herein is referred to as a current path in which each backlight string is located.

An embodiment of this application provides a flash calibration apparatus of a mobile device, configured to perform the foregoing flash calibration method for the mobile device. In this embodiment of this application, function modules in the flash calibration apparatus of the mobile device may be divided according to the foregoing method examples. For example, the function modules may be divided based on corresponding functions, or two or more functions may be integrated in one processing unit. The integrated module may be implemented in a form of hardware, or may be implemented in a form of a software function module. It should be noted that the module division in this embodiment of this application is an example, is merely logical function division, and may be another division manner in actual implementation.

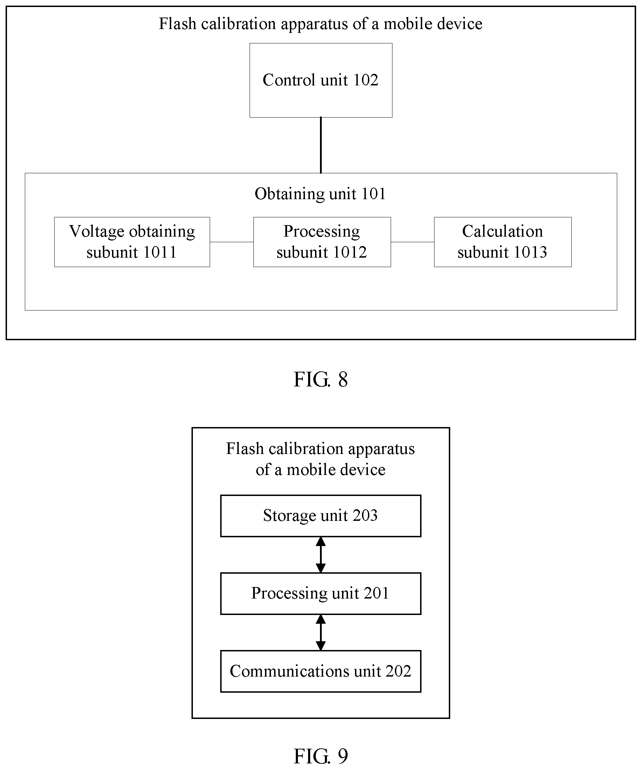

When the function modules are divided based on the functions, in a possible design, FIG. 8 is a possible schematic structural diagram of the flash calibration apparatus of the mobile device in the foregoing embodiment. The flash calibration apparatus of the mobile device includes an obtaining unit 101 and a control unit 102.

The obtaining unit 101 is configured to support the flash calibration apparatus of the mobile device in performing step 701 in FIG. 7. Optionally, the obtaining unit 101 includes: a voltage obtaining subunit 1011, configured to obtain a voltage of a sink current pin of a driver IC; a processing subunit 1012, configured to control a current value of a current source to be a predetermined test value; and a calculation subunit 1013, configured to calculate a current value of a shunt circuit based on the voltage, obtained by the voltage obtaining subunit 1011, of the sink current pin of the driver IC and a resistance value of the shunt circuit in a shunt module, and the calculation subunit 1013 is specifically configured to add the current value of the shunt circuit and the predetermined test value to obtain the current value of the drive current.

The control unit 102 is configured to support the flash calibration apparatus of the mobile device in performing steps 702 to 706 in FIG. 7. Further, the control unit 102 is specifically configured to control the current value of the current source to increase by a predetermined step value, and send a re-obtaining instruction; the obtaining unit 101 re-obtains a current value of the drive current according to the re-obtaining instruction; and when the current value, re-obtained by the obtaining unit 101, of the drive current falls out of the preset range around the rated flash current value, the control unit 102 controls the current value of the current source to increase by the predetermined step value. The control unit 102 is further specifically configured to control the current value of the current source to decrease by the predetermined step value, and send a re-obtaining instruction; the obtaining unit 101 re-obtains a current value of the drive current according to the re-obtaining instruction; and when the current value, re-obtained by the obtaining unit 101, of the drive current falls out of the preset range around the rated flash current value, the control unit 102 controls the current value of the current source to decrease by the predetermined step value.

According to the foregoing flash calibration apparatus of the mobile device, when the shunt circuit is closed, the obtaining unit first obtains the current value of the drive current flowing through a backlight string; when the current value, obtained by the obtaining unit, of the drive current is not equal to the rated flash current value, the control unit controls the current value of the current source to increase or decrease until the current value of the drive current falls within the preset range around the rated flash current value; and when the current value, obtained by the obtaining unit, of the drive current is equal to the rated flash current value, the control unit controls the current value of the current source to remain unchanged. Therefore, according to the flash calibration apparatus of the mobile device provided in this embodiment of the present invention, the drive current value of the backlight string is compared with the rated flash current value, then the current value of the current source is changed until the drive current value of the backlight string falls within a range close to the rated flash current value, and a last-changed-to current value of the current source can be used as a current standard of the current source when the mobile device needs to flash during subsequent work, so as to avoid an error of the drive current when the mobile device flashes.

In a possible design, FIG. 9 is another possible schematic structural diagram of the flash calibration apparatus of the mobile device in the foregoing embodiment. The flash calibration apparatus of the mobile device includes: a processing unit 201 and a communications unit 202. The processing unit 201 is configured to control and manage an action of the flash calibration apparatus of the mobile device, for example, the processing unit 201 is configured to support the flash calibration apparatus of the mobile device in performing the process 701 to 706 in FIG. 7. The communications unit 202 is configured to support the flash calibration apparatus of the mobile device in communicating with another entity, for example, communicating with a function module shown in FIG. 3. The flash calibration apparatus of the mobile device may further include a storage unit 203, configured to store program code and data of the flash calibration apparatus of the mobile device.

The processing unit 201 may be a processor or a controller, for example, may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The controller/processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The communications unit 202 may be a transceiver, a transceiver circuit, a communications interface, or the like. The storage unit 203 may be a memory.

When the processing unit 201 is a processor, the communications unit 202 is a communications interface, and the storage unit 203 is a memory, the flash calibration apparatus of the mobile device in this embodiment of this application may be the following flash calibration apparatus of a mobile device.

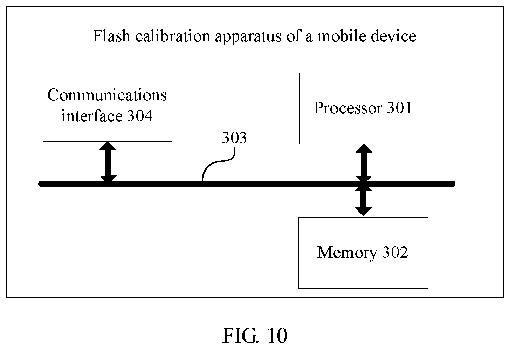

In a possible design, referring to FIG. 10, the flash calibration apparatus of the mobile device includes a processor 301, a memory 302, a bus 303, and a communications interface 304. The communications interface 304, the processor 301, and the memory 302 may be connected to each other by using the bus 303. The bus 303 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in the figure, but this does not mean that there is only one bus or only one type of bus.

In addition, because the flash calibration method for the mobile device provided in the embodiments of this application may be code, an embodiment of this application further provides a computer storage medium, including an instruction, where when the instruction is executed on a computer, the computer performs the backlight control method for the mobile device and/or the flash calibration method for the mobile device provided in the embodiments of this application; and provides a computer program product including an instruction, when the computer program product runs on the computer, the computer performs the backlight control method for the mobile device and/or the flash calibration method for the mobile device provided in the embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A mobile device, comprising a driver IC, a backlight module, an application processor, and a shunt module, wherein the driver IC and the shunt module are connected to the backlight module, and the backlight module comprises at least one backlight string;
a voltage output pin of the driver IC is connected to an anode of the backlight string, and a sink current pin of the driver IC is connected to a cathode of the backlight string; and
the shunt module comprises at least one shunt circuit, wherein an input end of the shunt circuit is connected to the cathode of the backlight string, and an output end of the shunt circuit is grounded; and the shunt circuit is further connected to the application processor, and the application processor is configured to control opening/closing of the shunt circuit, wherein when the shunt circuit is open, the driver IC drives the backlight string in the backlight module to emit light normally, and when the shunt circuit is closed, the driver IC drives the backlight string in the backlight module to flash.

2. The mobile device according to claim 1, wherein the shunt circuit comprises a shunt component and a switch, a first end of the shunt component is connected to the input end of the shunt circuit, a second end of the shunt component is connected to a first end of the switch, a second end of the switch is connected to the output end of the shunt circuit, and a control end of the switch is connected to a general purpose input/output interface of the application processor, wherein the control end of the switch controls on/off of the switch based on a signal of the application processor.

3. The mobile device according to claim 1 or 2, wherein the driver IC comprises at least one current source, a positive electrode of the current source is connected to the sink current pin, and a negative electrode of the current source is grounded, wherein when the shunt circuit is open, a current generated by the current source is used to drive the backlight string to emit light normally;
when the shunt circuit is closed, a current generated by the current source and a current generated by the shunt circuit are used to drive the backlight string to flash.

4. The mobile device according to claim 2, wherein the shunt component is at least one of the following: a resistor, a fixed current source, or a field effect transistor.

5. A backlight control method for the mobile device according to any one of claims 1 to 4, comprising:
when a backlight string emits light normally,
controlling, by an application processor, a shunt circuit in a shunt module to be open, wherein a voltage output pin of a driver IC outputs a drive current into an anode of the backlight string, to drive the backlight string to emit light normally, and the drive current flows to a sink current pin of the driver IC through the backlight string; and
when the backlight string flashes,
controlling, by the application processor, the shunt circuit in the shunt module to be closed, wherein the voltage output pin of the driver IC outputs a drive current into the anode of the backlight string, to drive the backlight string to flash; and the drive current is divided into two branches after passing through the backlight string, one branch enters the sink current pin of the driver IC, and the other branch flows to a ground end through the shunt module.

6. The backlight control method according to claim 5, wherein when the driver IC comprises at least one current source, the method further comprises:
when the backlight string emits light normally, a current value of the drive current is equal to a current value of the current source, and the driver IC controls the current value of the current source based on a preset brightness value, to make a light-emitting brightness value of the backlight string equal to the preset brightness value; and
when the backlight string flashes, the current value of the drive current is a sum of the current value of the current source and a current value of the shunt circuit, and the driver IC sets the current value of the current source in the driver IC based on a preset flash current value.

7. A flash calibration method for the mobile device according to any one of claims 1 to 4, comprising:
when a shunt circuit is closed, obtaining a current value of a drive current flowing through a backlight string;
when the current value of the drive current is less than a rated flash current value, controlling a current value of the current source to increase until the current value of the drive current falls within a preset range around the rated flash current value;
when the current value of the drive current is greater than the rated flash current value, controlling the current value of the current source to decrease until the current value of the drive current falls within the preset range around the rated flash current value; and
when the current value of the drive current is equal to the rated flash current value, controlling the current value of the current source to remain unchanged.

8. The flash calibration method according to claim 7, wherein the obtaining a current value of a drive current comprises:
obtaining a voltage of a sink current pin of a driver IC;
controlling the current value of the current source to be a predetermined test value; and
calculating a current value of the shunt circuit based on the voltage of the sink current pin of the driver IC and a resistance value of the shunt circuit in a shunt module, and adding the current value of the shunt circuit and the predetermined test value to obtain the current value of the drive current.

9. The flash calibration method according to claim 7 or 8, wherein the controlling a current value of the current source to increase until the current value of the drive current falls within a preset range around the rated flash current value comprises:
controlling the current value of the current source to increase by a predetermined step value;
re-obtaining a current value of the drive current; and
when the re-obtained current value of the drive current falls out of the preset range around the rated flash current value, controlling the current value of the current source to increase by the predetermined step value.

10. The flash calibration method according to any one of claims 7 to 9, wherein the controlling the current value of the current source to decrease until the current value of the drive current falls within the preset range around the rated flash current value comprises:
controlling the current value of the current source to decrease by the predetermined step value;
re-obtaining a current value of the drive current; and
when the current value of the drive current falls out of the preset range around the rated flash current value, controlling the current value of the current source to decrease by the predetermined step value.

11. A flash calibration apparatus of the mobile device according to any one of claims 1 to 4, comprising an obtaining unit and a control unit, wherein
the obtaining unit is configured to: when the shunt circuit is closed, obtain a current value of a drive current flowing through a backlight string;
when the current value, obtained by the obtaining unit, of the drive current is less than a rated flash current value, the control unit controls a current value of the current source to increase until the current value of the drive current falls within a preset range around the rated flash current value;
when the current value, obtained by the obtaining unit, of the drive current is greater than the rated flash current value, the control unit controls the current value of the current source to decrease until the current value of the drive current falls within the preset range around the rated flash current value; and
when the current value, obtained by the obtaining unit, of the drive current is equal to the rated flash current value, the control unit controls the current value of the current source to remain unchanged.

12. The flash calibration apparatus according to claim 11, wherein the obtaining unit comprises:
a voltage obtaining subunit, configured to obtain a voltage of a sink current pin of a driver IC;
a processing subunit, configured to control the current value of the current source to be a predetermined test value; and
a calculation subunit, configured to calculate a current value of the shunt circuit based on the voltage, obtained by the voltage obtaining subunit, of the sink current pin of the driver IC and a resistance value of the shunt circuit in a shunt module, and the calculation subunit is specifically configured to add the current value of the shunt circuit and the predetermined test value to obtain the current value of the drive current.

13. The flash calibration apparatus according to claim 11 or 12, wherein
the control unit is specifically configured to control the current value of the current source to increase by a predetermined step value, and send a re-obtaining instruction;
the obtaining unit re-obtains a current value of the drive current according to the re-obtaining instruction; and
when the current value, re-obtained by the obtaining unit, of the drive current falls out of the preset range around the rated flash current value, the control unit controls the current value of the current source to increase by the predetermined step value.

14. The flash calibration apparatus according to any one of claims 11 to 13, wherein
the control unit is specifically configured to control the current value of the current source to decrease by the predetermined step value, and send a re-obtaining instruction;
the obtaining unit re-obtains a current value of the drive current according to the re-obtaining instruction; and
when the current value, re-obtained by the obtaining unit, of the drive current falls out of the preset range around the rated flash current value, the control unit controls the current value of the current source to decrease by the predetermined step value.

15. A flash calibration apparatus of the mobile device according to any one of claims 1 to 4, comprising a processor, a memory, a bus, and a communications interface, wherein the memory is configured to store a computer execution instruction, the processor is connected to the memory by using the bus, and when the flash calibration apparatus of the mobile device runs, the processor executes the computer execution instruction stored in the memory, so that the flash calibration apparatus of the mobile device performs the method according to any one of claims 7 to 10.

16. A computer storage medium, comprising an instruction, wherein when the instruction is executed on a computer, the computer performs the method according to any one of claims 5 to 10.

17. A computer program product comprising an instruction, wherein when the computer program product runs on a computer, the computer performs the method according to any one of claims 5 to 10.
